# EUROPEAN PATENT APPLICATION

(11) **EP 1 980 727 A1**
(43) Date of publication of application: **15.10.2008**
(21) Application number: 07706814.6
(22) Date of filing: 16.01.2007
(51) Int. Cl.: F01N 7/10, F01N 7/00, F02D 35/00

(54) **EXHAUST MANIFOLD**

(30) Priority: 26.01.2006 JP 2006017721
(71) Applicant: Calsonic Kansei Corporation, Tokyo 164-8602 (JP)
(72) Inventor: UCHIDA, Kazuya, Tokyo 164-8602 (JP)
(74) Representative: Oxley, Robin John George
(86) International application number: PCT/JP2007/050487
(87) International publication number: WO 2007/086277

(57) **Abstract**

In an exhaust manifold (EM), a plurality of branch pipes (2 to 5) is bent downward from a head flange (1) to form like an L-letter shape, where exhaust-gas upstream side end portions of the pipes are connected with an engine through the head flange (1) and exhaust-gas downstream side end portions thereof are connected with a pipe collecting part (6) which is provided with a sensor (10) for detecting a state of exhaust gas. The pipe collecting part (6) has a reduced diameter portion (6d) where a length of the pipe collecting part (6) in a longitudinal direction (LN) of the head flange (1) is set shorter than that of the pipe collecting part (6) in a thickness direction (LT) of the head flange (1). The sensor (10) is provided on the reduced diameter portion (6d).

## Description

### [TECHNICAL FIELD]

The present invention relates to an exhaust manifold which is connected to an engine, especially an exhaust manifold provided with a sensor on a pipe collecting part thereof to detect a state of an exhaust gas passing therethrough.

### [BACKGROUND OF THE INVENTION]

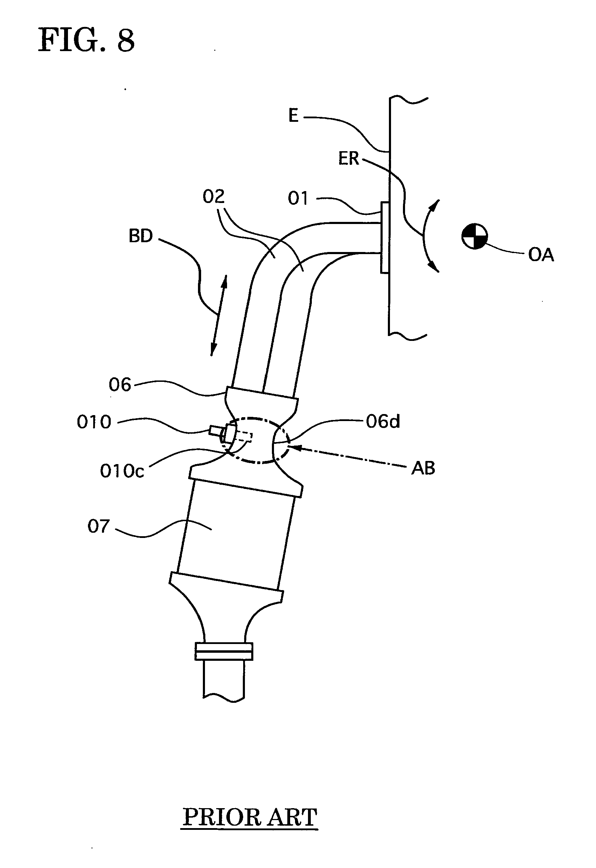

Conventional exhaust manifolds with a sensor are disclosed in Japanese Patent Applications Laid-open Publication No. 2003 - 83061 and No. 10 - 26037. As shown in FIG. 8, the conventional exhaust manifolds have a plurality of branch pipes 02 with upstream side portions being bent downward from a head flange 01 to form like an L-letter shape. Their upstream side end portions are connected with an engine E through the head flange 01. The downstream side end portions of the former are connected with a catalytic converter via a pipe collecting part 06, while those of the latter are aggregated and directly connected with a catalytic converter. The former is superior to the latter, in weigh saving and high-accurate detection of a state of an exhaust gas.
The pipe collecting part 06 has a reduced diameter portion 06d at its intermediate position, where the reduced diameter portion 06d has a circular cross section whose diameter is reduced compared to those of upstream and downstream side end portions thereof. The reduced diameter portion 06d is provided with a sensor 010 for detecting oxygen concentration in the exhaust gas so that a sensing part 010c of the sensor 010 is positioned in the center of a flow of the exhaust gas passing through the reduced diameter portion 06d to obtain high accurate sensing.

### [DISCLOSURE OF THE INVENTION]

### [PROBLEM(S) TO BE SOLVED BY THE INVENTION]

The former conventional exhaust manifold, however, has the following problem.
In the conventional exhaust manifold, all of branch pipes 02 are bent downward from the head flange 01 to form like an L-letter shape, exhaust-gas upstream side end portions of the branch pipes 02 are fixed to the engine E through the head flange 01, and exhaust-gas downstream side end portions thereof are fixed to a vehicle body through a catalytic converter 07 and others. A stress is produced due to the vibrations of the engine E (A direction of the vibration is indicated by an arrow ER around a vertical axis, vertical to a paper surface of this specification, passing through a point OA in FIG 8.) and also due to thermal expansion and contraction of the respective branch pipes 02 (A direction of thermal expansion and contraction are indicated by an arrow BD in FIG. 8.), and consequently the stress acts on the exhaust manifold so that the whole exhaust manifold may be folded like an L-letter shape. In this case, the pipe collecting part 06 and/or its periphery may very likely buckle up at the reduced diameter portion 06d, which is indicated by an alternate long and short dash lined ellipse AB and is weak in strength. In order to avoid this buckling, the pipe collecting part 06 is required to increase in thickness to enforce the strength of the reduced diameter portion 06d of the pipe collecting part 6. This causes the problem in that a temperature rise in an exhaust gas purifying catalyst is delayed due to the increase in weight and thermal capacity of the pipe collecting part 06.

The present invention is made to solve the above-described problem, and an object thereof is to provide an exhaust manifold which can enforce strength of a pipe collecting part without increasing its weight and detect a state of an exhaust gas with high accuracy by a sensor, thereby accelerating a temperature rise of an exhaust gas purifying catalyst to improve an exhaust gas purifying performance.

### [MEANS FOR SOLVING THE PROBLEMS]

According to an aspect of the present invention, there is provided an exhaust manifold including a head flange, a plurality of branch pipes, and a pipe collecting part. The head flange is fixed to an engine. The plurality of branch pipes is bent downward from the head flange to form like an L-letter shape, where the branch pipes have exhaust-gas upstream side end portions and exhaust-gas downstream side end portions. The exhaust-gas upstream side end portions are connected with the engine through the head flange, and the exhaust-gas downstream side end portions of the branch pipes are connected with the pipe collecting part. The pipe collecting part is provided with a sensor for detecting a state of an exhaust gas. The pipe collecting part has a reduced diameter portion in which a length, of the pipe collecting part, in a longitudinal direction of the head flange is set to be shorter than a length, of the pipe collecting part, in a thickness direction of the head flange. The reduced diameter portion is provided with the sensor.

Preferably, the pipe collecting part has an intermediate portion in which the both surfaces seen from the thickness direction are formed to have an involute curve.

Preferably, the pipe collecting part is formed to have curves at both sides, respectively, so that width lengths of the surfaces seen from the thickness direction become larger from an exhaust-gas upstream side end portion of the pipe collecting part to an exhaust-gas downstream side end portion thereof.

Preferably, the pipe collecting part has two divided bodies, which are separatable in the longitudinal direction along the thickness direction, coupled with each other.

Preferably, the sensor has a holding portion which is fixed on one of the surfaces seen from the longitudinal direction through a boss member provided thereon.

### [EFFECT OF THE INVENTION]

In the exhaust manifold of the present invention, the plurality of branch pipes is bent downward from the head flange to form the L-letter shape. The exhaust-gas upstream side end portions are connected with the engine through the head flange, and the exhaust-gas downstream side end portions of the branch pipes are connected with the pipe collecting part. The pipe collecting part is provided with the sensor for detecting the state of the exhaust gas. The pipe collecting part has a reduced diameter portion in which the length of the pipe collecting part in the longitudinal direction of the head flange is shorter than the length of the pipe collecting part in the thickness direction of the head flange, and the reduced diameter being provided with the sensor.
Therefore, the exhaust manifold of the invention can increase its strength without increasing the weight of the pipe collecting part. This can improve its exhaust gas purifying performance by promoting the rise in temperature of an exhaust gas purifying catalyst. In addition, it can detect the state of the exhaust gas with high accuracy.

In the invention, the pipe collecting part has the intermediate portion in which the both surfaces seen from the thickness direction are formed to have the involute curve. Therefore, it facilitates dispersion of the stress acting on the surfaces, thereby increasing the strength of the reduced diameter portion.

In the invention, the pipe collecting part is formed to have the curves at both sides, respectively, so that width lengths of the surfaces seen from the thickness direction become larger from the exhaust-gas upstream side end portion of the pipe collecting part to the exhaust-gas downstream side end portion thereof. Therefore, this can ensure the pipe collecting part 6 to bear the stress acting on the surfaces.

In the invention, the pipe collecting part has the two divided bodies, which are separatable in the longitudinal direction along the thickness direction, coupled with each other. Therefore, the pipe collecting part 6 can be manufactured easily and low costs.

In the invention, the sensor has the holding portion which is fixed on the one of the surfaces seen from the longitudinal direction through the boss member provided thereon. Therefore, strength of the surface provided with the holding portion and the boss member can be increased, a projecting amount of the oxygen sensor from the pipe collecting part being reduced, and the oxygen sensor being avoided from possible interference with other portions/parts.

### [BRIEF DESCRIPTION OF THE DRAWINGS]

The objects, features and advantages of the present invention will become apparent as the description proceeds when taken in conjunction with the accompanying drawings, in which:
FIG. 1 is a front view showing an exhaust manifold of an embodiment according to the present invention;
FIG 2 is a right side view showing the exhaust manifold of the embodiment;
FIG. 3 is a front view showing a pipe collecting part of the exhaust manifold of the embodiment;
FIG 4 is a rear view showing the pipe collecting part of the exhaust manifold of the embodiment;
FIG. 5 is a right side view showing the pipe collecting part of the exhaust manifold of the embodiment;
FIG. 6 is a left side view showing the pipe collecting part of the exhaust manifold of the embodiment;
FIG. 7 is a plan view showing the pipe collecting part of the exhaust manifold of the embodiment; and
FIG 8 is a right side view showing a conventional exhaust manifold and is used for explaining its problem.

### [DESCRIPTION OF REFERENCE NUMBERS]

- EM: exhaust manifold
- 1: head flange
- 1a: insertion hole
- 2, 3, 4, 5: branch pipe
- 6: pipe collecting part
- 6a, 6b: divided body
- 6c: exhaust-gas upstream side end portion
- 6d: reduced diameter portion
- 6e: opening portion
- 6f: exhaust-gas downstream side end portion
- 7: catalytic converter
- 8: catalyst carrier
- 9: flange portion
- 10: oxygen sensor
- 10a: wiring
- 10b: holding portion
- 10c: sensing part
- 11: boss member

### [BEST MODE FOR CARRYING OUT THE INVENTION]

Hereinafter, an embodiment of the present invention will be described with reference to the accompanying drawings.

### <Embodiment>

The embodiment of the present invention will be described.

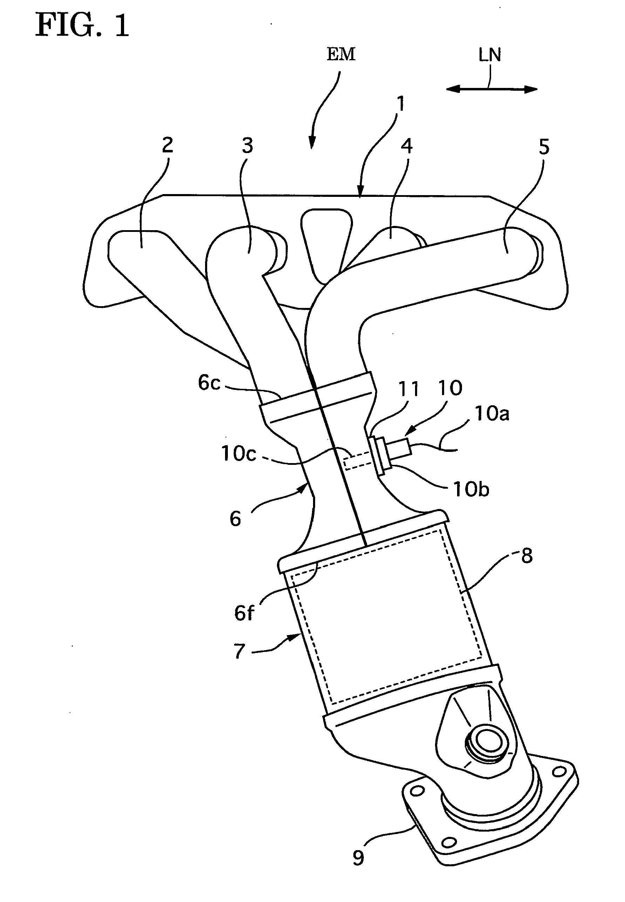

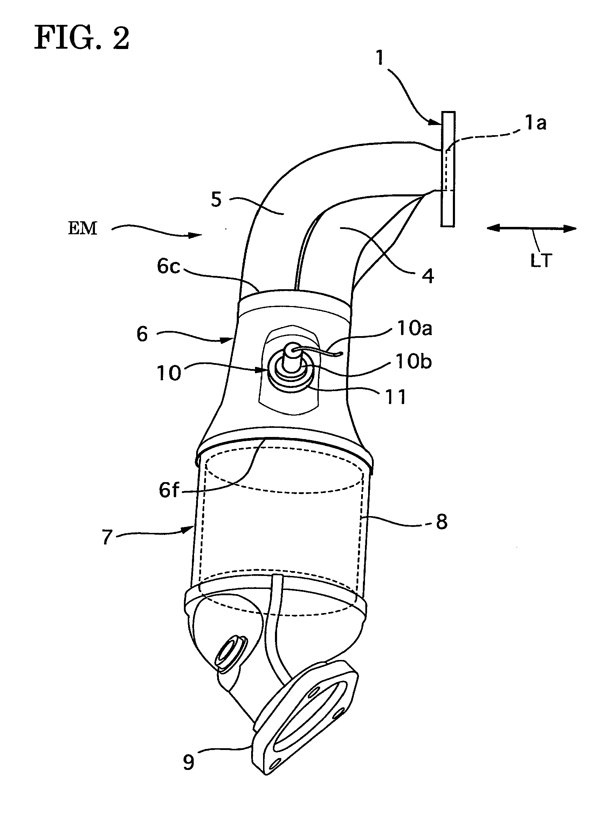

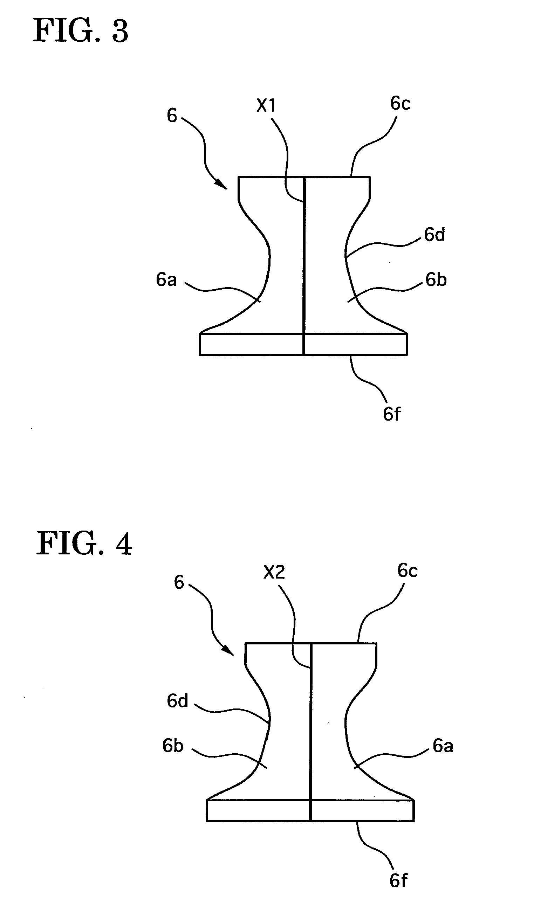

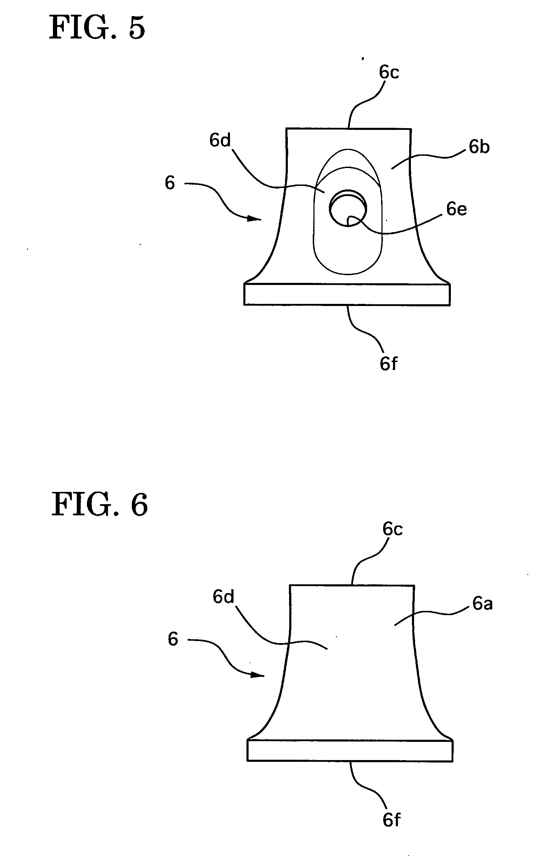

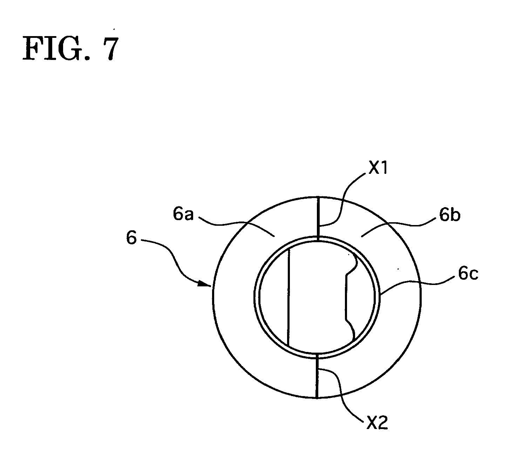

FIG. 1 is a front view showing an exhaust manifold of the embodiment according to the present invention, FIG. 2 is a right side view showing the exhaust manifold, FIG 3 is a front view showing a pipe collecting part of the exhaust manifold, FIG 4 is a rear view showing the same, FIG 5 is a right side view showing the same, FIG. 6 is a left side view showing the same, and FIG 7 is a plan view showing the same.

First the entire construction of the exhaust manifold EM of the embodiment will be described.
As shown in FIG. 1 and FIG. 2, the exhaust manifold EM includes a head flange 1, four branch pipes 2 to 5 and a pipe collecting part 6, and it is equipped with a catalytic converter 7 and an oxygen sensor 10.

The head flange 1 is formed like a plate and is fixed on one of side surfaces of a not-shown cylinder head of a not-shown engine.
The branch pipes 2 to 5 are projected in a lateral direction of the engine from the head flange 1 so that they are bent downward therefrom to form like an L-letter shape.
As shown in FIG 2, exhaust-gas upstream side end portions of the branch pipes 2 to 5 are connected to respective insertion holes 1a formed on the head flange 1, where the insertion holes 1a are communicated to cylinders of the engine, respectively. Exhaust-gas downstream side end portions thereof are formed to each have a quadrant cross section to be assembled together so as to form a circular pipe, thereby being connected to an exhaust-gas upstream side end portion 6c of the pipe collecting part 6.
An exhaust-gas downstream side end portion 6f of the pipe collecting part 6 is connected with an exhaust-gas side upstream side end portion of the catalytic converter 7 which contains a catalyst carrier 8.
An exhaust-gas downstream side end portion of the catalytic converter 7 is provided with a flange portion 9 for fixing a not-shown downstream side exhaust pipe.

As shown in FIGS. 3 to 7, the pipe collecting part 6 is made of a pair of divided bodies 6a and 6b, formed by using a not-shown press forming machine, which are coupled and welded with each other at their edge portions X1 and X2 to form like a tube. The exhaust-gas upstream side end portion 6c of the pipe collecting part 6 has an opening for receiving the exhaust-gas downstream portions of the branch pipes 2 to 5. An intermediate portion of the pipe collecting part 6 is formed as a reduced diameter portion 6d. In the reduced diameter part 6, lengths of surfaces orthogonal to surfaces on which the branch pipes 2 to 5 are bent like the L-letter shape is shorten compared to lengths of the latter surfaces. In other words, the reduced diameter portion 6d is formed so that the length of the pipe collecting part 6 in the longitudinal direction, indicated by an arrow LN in FIG. 1, of the head flange 1 is set to be shorter than the length of the pipe collecting part 6 in a thickness direction, indicated by an arrow LT in FIG 2, where the longitudinal direction LN also corresponds to a longitudinal direction of the engine and the thickness direction LT also corresponds to a lateral direction of the engine.

As shown in FIG 5, an opening portion 6e is formed, for receiving the oxygen sensor 10, on one of the surfaces of the reduced diameter portion 6d, namely on the surface seen from the longitudinal direction LN of the head flange 1 as shown in FIG 1 and FIG 2. The oxygen sensor 10 is fixed along the longitudinal direction LN, and it serves as a sensor of the present invention.

An opening of the exhaust-gas downstream side end portion 6f of the pipe collecting part 6 is expanded in diameter so as to receive an exhaust-gas upstream side end portion of the catalytic converter 7.

The pipe collecting part 6 is formed to have an outer shape described below. As shown in FIG. 3 and FIG. 4, the outer shape is formed in such a way that the outer profiles, seen from in the thickness direction LT, of the surfaces, seen from the longitudinal direction LN, are formed like an involute curve, from the exhaust-gas upstream side end portion 6c to the exhaust-gas downstream side end portion 6f, thereby providing the intermediate portion thereof to be reduced in diameter. Accordingly, as shown in FIG 5 and FIG 6, the outer profiles of the surfaces, seen from the thickness direction LT, are formed like a gradually expanding curve from the exhaust-gas upstream side end portion to the exhaust-gas downstream side end portion.

As shown in FIG. 1 and FIG 2, the oxygen sensor 10 is used for detecting an oxygen concentration in the exhaust gas passing through the pipe collecting part 6 to carry out feedback control of an air-fuel ratio of an air-fuel mixture to be supplied to the engine. One end portion of the sensor 10 is provided with a wiring 10a electrically connected to a not-shown control unit, the intermediate portion thereof is formed with a holding portion 10b contacted with a cylindrical boss member 11 provided on the opening portion 6e of the pipe collecting part 6, and the other end portion thereof is provided with a sensing part 10c arranged at a center position of a flow of the exhaust gas when it is inserted into the opening portion 6e of the pipe collecting part 6.

At least the head flange 1, the branch pipes 2 to 5, the pipe collecting part 6 and the catalytic converter 7 are made of metal like stainless. Thus constructed exhaust manifold EM is connected with the cylinder head of the engine through the head flange 1, and the flange portion 9 of the catalytic converter 8 is connected with the downstream side exhaust pipe attached to the vehicle body when they are mounted on the vehicle body.

Next the operation of the exhaust manifold EM of the embodiment will be described.
Before that, the problem of the conventional exhaust manifold will be explained below.
In the conventional exhaust manifold, each branch pipe 02 of the exhaust manifold EM is formed to bend from the head flange 01 like the L-letter shape, the exhaust-gas upstream side end portion thereof being fixed to the engine through the head flange 01, and the exhaust-gas downstream side end portion thereof being fixed to the vehicle body through the catalytic converter 07 and others. Therefore, a stress is produced due to the thermal expansion and contraction of each branch pipe and also due to the vibrations of the engine, thereby acting on the whole exhaust manifold to be folded like the L-letter shape. In order to avoid this folding, the pipe collecting part 06 requires to be enforced in strength thereof by increasing the thickness of the pipe collecting part 06. This increase in the thickness causes the problems in that the temperature rise in the exhaust gas purifying catalyst is delayed due to the increase in its mass and thermal capacity.

On the other hand, in the exhaust manifold EM of the embodiment, the reduced diameter part 6c of the pipe collecting part 6 is not formed in such a way that the lengths of the surfaces, parallel to the surface extending along which the branch pipes 2 to 5 are bent, are reduced in diameter. This can ensure the pipe collecting part 6 to have the strength enough to bear the stress due to the thermal expansion and contraction of the branch pipes 2 to 5 and due to the vibration of the engine, without increasing the thickness of the pipe collecting part 6.

In addition, in the exhaust manifold of the embodiment, the reduced diameter portion 6d is formed so that the lengths of the surfaces, orthogonal to the surfaces along which the branch pipes 2 to 5 are bent, are set to be shorter than the length of the latter surface, and the oxygen sensor 10 is provided on the reduced diameter portion 6d. This enables the oxygen sensor 10 to detect the state of the exhaust gas with high accuracy, because the sensing part 10c of the oxygen sensor 10 can be positioned in the center of a flow of the exhaust gas passing the reduced cross section of the pipe collecting part 6.

Next the advantages of the exhaust manifold EM of the embodiment will be described.
As described above, in the exhaust manifold EM of the embodiment, the plurality of branch pipes 2 to 5 is formed to bend from the head flange 1 like the L-letter shape, the exhaust-gas upstream side end portions of the branch pipes 2 to 5 are connected with the engine through the head flange 1, and the exhaust-gas downstream side end portions thereof are connected with the pipe collecting part 6, which is provided with the oxygen sensor 10 for detecting the state of the exhaust gas. The reduced diameter portion 6d of the pipe collecting part 6 is formed so that lengths of the surfaces, orthogonal to the surfaces along which the branch pipes 2 to 5 are bent like the L-letter shape, are set to be shorter than those of the latter surfaces. The reduced diameter portion 6d is provided with the oxygen sensor 10.
Therefore, the exhaust manifold EM of the embodiment can increase its strength without increasing the weight of the pipe collecting part 6. This can improve its exhaust gas purifying performance by accelerating the temperature rise in the catalyst carrier (an exhaust gas purifying catalyst) 8 in the catalytic converter 7. In addition, the oxygen sensor 10 can detect the state of the exhaust gas with high accuracy because it is located in the center of the flow of the exhaust gas passing through the reduced diameter portion 6d.

The both surfaces, seen from the longitudinal direction LN, of the reduced diameter portion 6 are formed like the involute curve. The involute curved surfaces facilitate dispersion of the stress acting on the surfaces, thereby increasing the strength of the reduced diameter portion 6d.

The both surfaces, seen from the thickness direction LT, of the pipe collecting part 6 is formed to have the curve at their side edge portions so that longitudinal directional (width) lengths of the surfaces are set to be larger from the exhaust-gas upstream side end portion to the exhaust-gas downstream side end portion. This profile can ensure the pipe collecting part 6 to bear the stress acting on the surfaces.

The pipe collecting part 6 consists of the two divided bodies 6a and 6b, which are firstly separated in the longitudinal direction LN along the thickness direction LT and then are coupled with each other. Therefore, the pipe collecting part 6 can be manufactured easily and at low costs.

The oxygen sensor 10 is provided so that the holding portion 10b is placed on one of the surfaces seen from the longitudinal direction LN, via the cylindrical boss member 11. Therefore, the cylindrical boss portion 11 and the holding portion 10b can increase the strength of the surface provided therewith. In addition, they can reduce a projecting amount of the oxygen sensor 10 from the pipe collecting part 6, and can avoid the oxygen sensor 6 from possible interferences with other portions/parts.

It is understood that the invention is not limited to the above-described embodiment but that various changes and/or modifications may be made without departing from the sprit and/or the scope of the present invention.
For example, the oxygen sensor 10 is provided on the one surface, seen from the longitudinal direction LN, of the reduced diameter portion 6d of the pipe collecting part 6 in the embodiment, while it may be provided on the other surface of the reduced diameter portion 6d.
The sensor of the present invention is not limited to the oxygen sensor, and it may employ a sensor for detecting a state of the exhaust gas, for example, a temperature sensor for detecting a temperature of the exhaust gas.

In the embodiment, the pipe collecting part 6 is manufactured by the two divided bodies 6a and 6b being coupled with each other, while it may be made of one pipe by using press working, spinning or the like.

### [INDUSTRIAL AVAILABILITY]

The exhaust manifold EM of the present invention is applicable to exhaust manifolds of various engines, including transversely mounted engines and longitudinally mounted engines, as long as the engines use an exhaust manifold for discharging exhaust gas therethrough.

## Claims

1. An exhaust manifold (EM) comprising:
a head flange (1) fixed to an engine;
a plurality of branch pipes (2 to 5) which is bent downward from the head flange (1) to form like an L-letter shape, the branch pipes (2 to 5) having exhaust-gas upstream side end portions (6c) and exhaust-gas downstream side end portions (6f) where the exhaust-gas upstream side end portions (6c) are connected with the engine through the head flange (1); and
a pipe collecting part (6) connected with the exhaust-gas downstream side end portions (6c) of the branch pipes (2 to 5), the pipe collecting part (6) being provided with a sensor (10) for detecting a state of an exhaust gas, wherein
the pipe collecting part (6) has a reduced diameter portion (6d) in which a length, of the pipe collecting part (6), in a longitudinal direction (LN) of the head flange (1) is set to be shorter than a length, of the pipe collecting part (6), in a thickness direction (LT) of the head flange (1), the reduced diameter portion (6d) being provided with the sensor (10).

2. The exhaust manifold (EM) according to claim 1, wherein
the pipe collecting part (6) has an intermediate portion in which the both surfaces seen from the thickness direction (LT) are formed to have an involute curve.

3. The exhaust manifold (EM) according to claim 1 or claim 2, wherein
the pipe collecting part (6) is formed to have curves at both sides, respectively, so that width lengths of the surfaces seen from the thickness direction (LT) become larger from an exhaust-gas upstream side end portion (6c) of the pipe collecting part (6) to an exhaust-gas downstream side end portion (6f) thereof.

4. The exhaust manifold (EM) according to any one of claims 1 to 3, wherein
the pipe collecting part (6) has two divided bodies (6a, 6b), which are separatable in the longitudinal direction (LN) along the thickness direction (LT), coupled with each other.

5. The exhaust manifold (EM) according to any one of claims 1 to 4, wherein
the sensor (10) has a holding portion (10b) which is fixed on one of the surfaces seen from the longitudinal direction (LN) through a boss member (11) provided thereon.
